# FASCICULE DE BREVET EUROPEEN

(11) **EP 0 402 280 B1**
(45) Date de publication et mention de la délivrance du brevet: **20.01.1993**
(21) Numéro de dépôt: 90420262.9
(22) Date de dépôt: 31.05.1990
(51) Int. Cl.: A23L 1/277, A23L 1/214, A23L 1/015, A23K 1/02, A23K 1/14

(54) **Procédé de fabrication de pulpes végétales blanchies**
Verfahren zur Herstellung von blanchiertem pflanzlichen Fruchtfleisch
Process for the fabrication of vegetable blanched pulpes

(30) Priorité: 05.06.1989 FR 8907624
(43) Date de publication de la demande: 12.12.1990
(73) Titulaire: ELF ATOCHEM S.A., 92800 Puteaux (FR)
(72) Inventeur: Devic, Michel, F-69110 Sainte-Foy-Les-Lyon (FR)

(56) Documents cités:
- CH-A- 491 607
- DE-A- 2 709 965
- DE-A- 2 906 528
- US-A- 4 241 093
- PATENT ABSTRACTS OF JAPAN, vol. 12, no. 50 (C-476)(2897), 16 février 1988

## Description

La présente invention concerne un procédé de fabrication de pulpes végétales blanchies, plus particulièrement de pulpes végétales à usage alimentaire blanchies à l'aide de peroxyde d'hydrogène en solution aqueuse alcaline.

Les pulpes végétales dont le blanchiment est visé par la présente invention sont par exemple celles de betterave sucrière ou non, d'agrumes, de fruits tels que pêche, poire, pomme, abricot, d'oléagineux comme le tournesol, de céréales comme le blé, le maïs ou l'avoine, de légumes comme le petit pois, après que le produit normalement valorisable à partir de chacune d'elles, comme le sucre, le jus de fruit, la pectine, l'huile, l'amidon, la farine, en ait été extrait de manière connue.

Ces pulpes, dites pulpes extraites, qui constituent la matière végétale de base à laquelle est destiné le procédé de la présente invention, sont désignées dans tout ce qui suit par le seul terme de pulpe, sauf précision.

Elles se caractérisent par une teneur élevée en fibres alimentaires, déterminable par méthode enzymatique connue.

Elles sont utilisables dans l'industrie pour fabriquer des produits alimentaires, des farines par exemple. Mais le développement commercial de ces produits est malheureusement souvent freiné par une coloration trop foncée.

Pour améliorer cet état de chose, il a été proposé de soumettre les pulpes à l'action du peroxyde d'hydrogène en solution aqueuse alcaline, comme le propose par exemple le brevet des Etats Unis d'Amérique n°4241093. Cependant, même quand l'action du peroxyde d'hydrogène est précédée d'un lavage de la pulpe en milieu acide à l'aide d'un agent décolorant comme l'anhydride sulfureux, le résultat atteint jusqu'à maintenant est seulement un éclaircissement de la pulpe, par exemple du gris au jaune dans le cas de la pulpe de betterave comme l'indique le brevet français publié sous le n°2382866.

La présente invention permet, contrairement aux procédés connus, d'obtenir des pulpes réellement blanchies, de degré de blancheur élevé pour le domaine technique concerne.

Elle consiste en un procédé de fabrication de pulpes végétales extraites blanchies à l'aide de peroxyde d'hydrogène en solution aqueuse alcaline, dans lequel la pulpe est traitée en milieu acide avant d'être soumise à l'action du peroxyde d'hydrogène, caractérisé en ce que, successivement et cumulativement :
- le traitement de la pulpe en milieu acide est réalisé à un pH dont la valeur reste égale ou inférieure à 2,5 environ,
- la durée du traitement de la pulpe en milieu acide est égale ou supérieure à 10 minutes environ,
- la pulpe traitée en milieu acide est lavée avec une efficacité égale ou supérieure à 80 %,
- la pulpe lavée est soumise à l'action du peroxyde d'hydrogène en présence d'un agent stabilisant dudit peroxyde.

La pulpe est mise en oeuvre sous forme de suspension aqueuse de la matière végétale de consistance plus ou moins grande.

La consistance est traduite par la concentration en matière végétale comptée à l'état sec exprimée en pour cent en poids.

Pour la réalisation de l'invention :
. la consistance dans le traitement acide est généralement comprise entre 2 % et 30 %,
. le traitement acide est réalisé à une température dont la valeur maximale dépend essentiellement de la stabilité thermique de la pulpe considérée. Elle est le plus souvent comprise entre environ 20°C et 100°C, et de préférence égale ou inférieure à 60°C environ,
. le pH au cours du traitement acide est obtenu grâce à l'addition à la pulpe d'un acide minéral ou organique choisi essentiellement parmi l'acide chlorhydrique, l'acide phosphorique, l'acide sulfurique, l'acide sulfureux, l'acide acétique, l'acide fluorhydrique, ou d'un mélange de ces acides,
. la durée du traitement en milieu acide dépend du choix des autres paramètres mais est le plus souvent inférieure à 1 heure environ,
. l'équipement convenant à la réalisation du traitement en milieu acide peut être un mélangeur de type classique ou bien un mélangeur-disperseur dans lequel l'agitation périphérique raclante est lente et l'agitation centrale, inversée par rapport à la première, rapide. Un tel équipement est par exemple commercialisé par la socété française CELLIER. Le traitement en milieu acide peut être aussi décomposé en deux étapes, l'une dans laquelle la pulpe et l'acide sont mélangés intensément dans un système comprenant une ou plusieurs vis hélicoïdales permettant d'atteindre une pression élevée, l'autre, de séjour, avec ou sans agitation.

La première étape peut être réalisée par exemple dans un mélangeur à haute densité connu dans l'industrie papetière ou dans une machine essentiellement constituée de deux surfaces hélicoïdales pénétrant l'une dans l'autre, enroulés autour d'arbres parallèles, entraînées en rotation synchrone dans le même sens à l'intérieur d'un fourreau les enveloppant, et déterminant de l'amont vers l'aval dans le sens d'avancée de la matière une succession de zones d'entraînement et de freinage de la matière, décrite par exemple dans les brevets français publiés sous les numéros 2319737, 2418295, 2451963 et le certificat d'addition français publié sous le numéro 2436844, et commercialisée par exemple par la société française CLEXTRAL sous le nom de "BI-VIS". La durée de cette première étape est généralement inférieure à 1 minute,
. le lavage est normalement réalisé à l'eau, à une température comprise de préférence entre 20°C et 60°C,

Par lavage s'entend l'opération d'élimination d'un certain pourcentage de la phase liquide présente dans la pulpe avant son lavage. L'efficacité du lavage est traduite par ce pourcentage. Elle est ici de préférence égale ou supérieure à 90 %.

Le lavage consiste ordinairement en une séquence répétée de dilution de la pulpe et d'essorage de celle-ci le plus souvent par filtration ou pressage. Une machine de type "BI-VIS" telle que décrite ci-dessus convient bien à son exécution.
. l'agent stabilisant du peroxyde d'hydrogène est choisi le plus souvent en pratique parmi le silicate de sodium, le magnésium sous forme de magnésie ou sous forme de sel soluble comme le chlorure ou le sulfate.

Tous autres stabilisants du peroxyde d'hydrogène en milieu alcalin compatibles avec un usage alimentaire sont utilisables.

Le silicate de sodium est mis en oeuvre commodémment sous forme de solution aqueuse de densité égale à 1,33. C'est la quantité de cette solution qui est exprimée quand référence est faite dans tout ce qui suit au silicate de sodium. La quantité de silicate de sodium, comme celle de tout réactif dans tout ce qui suit est exprimée en pour cent en poids par rapport à la matière végétale comptée à l'état sec. Elle est comprise ici le plus souvent entre environ 0,5 % et 6 %, de préférence entre 2 % et 4 %.

Le magnésium est mis en oeuvre à raison d'environ 0,25 % à 1 %,
. pendant l'action du peroxyde d'hydrogène sur la pulpe lavée, la consistance est choisie égale à une valeur comprise généralement entre environ 5 % et 30 %, et de préférence égale ou supérieure à 10 %, la température généralement entre environ 20°C et 90°C, de préférence égale ou supérieure à 60°C. La durée de ladite action est le plus souvent comprise entre quelques minutes et plusieurs heures selon la température choisie. Elle est par exemple de l'ordre de 2 heures quand la température choisie dans le cas de la pulpe de betterave est d'environ 60°C,
. les remarques faites plus haut à propos du traitement en milieu acide quant à l'équipement et à la possibilité de décomposer l'opération en deux étapes sont transposables à la phase d'action du peroxyde d'hydrogène. Le temps de séjour nécessaire à celle-ci peut être aussi assurée dans une tour de blanchiment connue dans l'industrie papetière,
. le peroxyde d'hydrogène est employé généralement à raison de 1 % à 10 % environ, de préférence à raison de 5 % ou moins.

L'agent alcalin généralement ajouté au peroxyde d'hydrogène, est l'hydroxyde de sodium employé le plus souvent à raison d'une quantité comprise entre environ 2 % et 5 %. A titre indicatif le pH après action du peroxyde d'hydrogène, est en général inférieur à 8,5 pour la plupart des pulpes.

Schématiquement le procédé de l'invention est réalisable par exemple dans un équipement constitué de la succession des appareillages principaux suivants : une première machine de type "BI-VIS" dans laquelle est réalisé le mélange de la pulpe avec l'acide dans les conditions du traitement en milieu acide, une capacité de séjour, une deuxième machine de type "BI-VIS" dans laquelle sont réalisés succesivement le lavage de la pulpe qui a été traitée en milieu acide et le mélange de la pulpe lavée avec le peroxyde d'hydrogène et les produits qui l'accompagnent dans les conditions d'action du peroxyde d'hydrogène, une capacité de séjour.

La pulpe initiale, avant traitement en milieu acide, peut être avantageusement lavée à l'eau pour la débarasser des corps étrangers comme le sable.

Après avoir été soumise à l'action du peroxyde d'hydrogène, la pulpe est de préférence amenée à un pH compris entre environ 5 et 6 au moyen d'un agent acide tel que l'anhydride sulfureux en solution aqueuse, de façon à en améliorer la conservation ou stockage, puis lavée et séchée en vue de son utilisation.

### Exemple 1 :

Une pulpe de betterave sucrière de laquelle le sucre a été extrait, qui est à l'état d'une suspension aqueuse dont le pH est égal à 6, dont la consistance est égale à 5 % et qui contient 10 kg de matière végétale à l'état sec, est amenée à pH égal à 2 par addition de 540 g. d'acide sulfurique à 96 % en poids, et agitée à ce pH durant 20 minutes à une température égale à 35°C avant d'être filtrée et lavée à l'eau sur tamis vibrant avec une efficacité de lavage égale à 90 %.

La pulpe ainsi lavée est reprise du filtre et amenée à une consistance de 10 % pour être soumise sous agitation à l'action de 0,715 kg d'une solution aqueuse de peroxyde d'hydrogène à 70 % en poids de peroxyde, de 1 kg d'une solution aqueuse d'hydroxyde de sodium à 20 % d'hydroxyde, et de 0,4 kg de silicate de sodium, pendant 2 heures à 60°C.

Le pH de la pulpe après ces 2 heures est égal à 6,8.

La pulpe est ensuite amenée à pH 6 au moyen de dioxyde de soufre en solution aqueuse, puis filtrée, lavée et séchée. Elle conduit finalement après broyage en grains de dimension inférieure à 100 µm à une farine blanche d'apparence et dont le poids correspond à plus de 80 % du poids de la pulpe de départ comptée à l'état sec.

Le degré de blancheur de cette farine, mesuré sur des pastilles frittées en degré de blanc ISO selon la norme ISO de l'industrie papetière, est égal à 41,5°ISO tandis que la pulpe de départ a un degré de blanc mesuré dans les mêmes conditions égal seulement à 34°ISO.

### Exemple 2 :

Une pulpe ou drêche de maïs, résidu du maïs après extraction de l'amidon, dont la consistance est égale à 9,8 % et qui contient 7,9 kg de matière végétale à l'état sec, est amenée à pH égal à 2,1 par addition à la pulpe de 274 g d'acide sulfurique 96 %, puis agitée à ce pH durant 30 minutes à 30°C, avant d'être lavée avec une efficacité supérieure à 90 % puis soumise sous agitation à l'action de 0,63 kg d'une solution aqueuse de peroxyde d'hydrogène à 70 % de peroxyde, de 0,88 kg d'une solution aqueuse d'hydroxyde de sodium à 20 % d'hydroxyde, et de 0,352 kg de silicate de sodium, pendant 2 heures à 60°C. Après ces 2 heures le pH est de 7,5.

En procédant ensuite de façon similaire à ce qui est décrit pour la pulpe de betterave dans l'exemple 1, la pulpe de maïs blanchie finalement obtenue a un degré de blancheur égal à 43°ISO alors qu'il n'était égal qu'à 30°ISO pour la pulpe de départ.

### Exemple 3 :

En opérant comme dans l'exemple 1, avec la même pulpe de betterave et selon le même processus, mais en réalisant le traitement en milieu acide à l'aide d'acide chlorhydrique au lieu d'acide sulfurique, à une consistance de 2 % au lieu de 5 %, et en utilisant une quantité d'hydroxyde de sodium égale à 3 % au lieu de 2 % lors de l'action du peroxyde d'hydrogène, le degré de blancheur de la pulpe blanchie, mesuré comme dans l'exemple 1, est égal à 46°ISO.

En opérant comme ci-dessus mais en omettant le traitement de la pulpe en milieu acide, ce degré de blanc n'est plus que de 38°ISO et la farine obtenue est jaune.

### Exemple 4 :

En procédant selon l'invention comme dans l'exemple 3 mais en substituant le dioxyde de soufre à l'acide chlorhydrique pour amener à 2 au lieu de 2,2 la valeur du pH de la pulpe durant le traitement en milieu acide, le degré de blancheur de la pulpe blanchie, mesuré dans les conditions des autres exemples, est égal à 45°ISO.

### Exemple 5 :

En opérant comme dans l'exemple 1 mais avec une pulpe de betterave de degré de blanc initial égal à 37°ISO, en réalisant le traitement de la pulpe en milieu acide à une consistance égale à 2 % et en faisant agir le peroxyde d'hydrogène sur la pulpe lavée à raison de 10 % de peroxyde d'hydrogène compté en 100 % avec 4 % d'hydroxyde de sodium compté en 100 %, le pH après action du peroxyde d'hydrogène est égal à 7,6 et on obtient une pulpe blanchie de degré de blanc égal à 53°ISO tandis que seulement 44 % du peroxyde d'hydrogène engagé sont consommés.

Le poids de matière sèche blanchie est égal à 80 % de la matière végétale initiale à l'état sec.

## Revendications

1. Procédé de fabrication de pulpes végétales extraites blanchies à l'aide de peroxyde d'hydrogène en solution aqueuse alcaline, dans lequel la pulpe est traitée en milieu acide avant d'être soumise à l'action du peroxyde d'hydrogène, caractérisé en ce que, successivement et cumulativement :
- le traitement de la pulpe en milieu acide est réalisé à un pH dont la valeur reste égale ou inférieure à 2,5,
- la durée du traitement de la pulpe en milieu acide est égale ou supérieure à 10 minutes,
- la pulpe traitée en milieu acide est lavée avec une efficacité égale ou supérieure à 80 %,
- la pulpe lavée est soumise à l'action du peroxyde d'hydrogène en présence d'un agent stabilisant dudit peroxyde;

2. Procédé selon la revendication 1, caractérisé en ce que la consistance pendant le traitement en milieu acide est comprise entre 2 % et 30 %.

3. Procédé selon l'une des revendications 1 et 2, caractérisé en ce que le traitement en milieu acide est réalisé à une température comprise entre 20°C et 100°C.

4. Procédé selon la revendication 3, caractérisé en ce que la température est égale ou inférieure à 60°C.

5. Procédé selon l'une des revendications 1 à 4, caractérisé en ce que le pH pendant le traitement de la pulpe en milieu acide est obtenu au moyen d'acides minéraux ou organiques employés seuls ou en mélange.

6. Procédé selon la revendication 5, caractérisé en ce que l'acide ou les acides sont choisis parmi l'acide chlorhydrique, l'acide phosphorique, l'acide sulfurique, l'acide sulfureux, l'acide acétique, l'acide fluorhydrique.

7. Procédé selon l'une des revendications 1 à 6, caractérisé en ce que le lavage est réalisé au moyen d'eau à une température comprise entre 20°C et 60°C.

8. Procédé selon l'une des revendications 1 à 7, caractérisé en ce que l'agent stabilisant du peroxyde d'hydrogène est choisi parmi le silicate de sodium ou le magnésium sous forme de sels solubles ou de magnésie.

9. Procédé selon la revendication 8, caractérisé en ce que le silicate de sodium est utilisé à raison de 0,5 % à 6 % et de préférence à raison de 2 % à 4 %.

10. Procédé selon la revendication 8, caractérisé en ce que le magnésium est utilisé à raison de 0,25 % à 1 %.

11. Procédé selon l'une des revendications 1 à 10, caractérisé en ce que pour l'action du peroxyde d'hydrogène sur la pulpe lavée, la consistance est comprise entre 5 % et 30 %, la température comprise entre 20°C et 90°C, la quantité de peroxyde d'hydrogène engagé comprise entre 1 % et 10 %, l'agent alcalin ajouté au peroxyde d'hydrogène est l'hydroxyde de sodium engagé à raison de 2 % à 5 %.

12. Procédé selon la revendication 11, caractérisé en ce que la consistance est égale ou supérieure à 10 %, la température égale ou supérieure à 60°C, la quantité de peroxyde d'hydrogène engagé égale ou inférieure à 5 %.

13. Procédé selon l'une des revendications 1 à 12, caractérisé en ce que tout ou partie du traitement de la pulpe en milieu acide, du lavage, de l'action du peroxyde d'hydrogène sur la pulpe lavée, peut être réalisée dans une machine essentiellement constituée de deux surfaces hélicoïdales pénétrant l'une dans l'autre, enroulées autour d'arbres parallèles, entrainées en rotation synchrone dans le même sens à l'intérieur d'un fourreau les enveloppant, et déterminant de l'amont vers l'aval, dans le sens d'avancée de la matière, une succession de zones d'entrainement et de freinage de la matière.

## Patentansprüche

1. Verfahren zur Herstellung von extrahierten pflanzlichen Pulpen, die mit Hilfe von Wasserstoffperoxid in alkalischer wäßriger Lösung gebleicht wurden, wobei die Pulpe in saurem Milieu behandelt wurde, bevor sie der Einwirkung des Wasserstoffperoxids ausgesetzt wurde, dadurch gekennzeichnet, daß aufeinanderfolgend oder kumulativ:
- die Behandlung der Pulpe in saurem Milieu bei einem pH-Wert gleich oder kleiner 2,5 durchgeführt wird,
- die Dauer der Behandlung der Pulpe in saurem Milieu 10 Minuten oder mehr beträgt,
- die in saurem Milieu behandelte Pulpe mit einer Wirksamkeit von 80 % oder mehr gewaschen wird,
- die gewaschene Pulpe der Einwirkung von Wasserstoffperoxid in Gegenwart eines Stabilisators für das Peroxid unterworfen wird.

2. Verfahren nach Anspruch 1, dadurch gekennzeichnet, daß die Stoffdichte während der Behandlung in saurem Milieu zwischen 2 % und 30 % beträgt.

3. Verfahren nach Anspruch 1 oder 2, dadurch gekennzeichnet, daß die Behandlung in saurem Milieu bei einer Temperatur zwischen 20°C und 100°C durchgeführt wird.

4. Verfahren nach Anspruch 3, dadurch gekennzeichnet, daß die Temperatur 60°C oder weniger beträgt.

5. Verfahren nach einem der Ansprüche 1 bis 4, dadurch gekennzeichnet, daß der pH-Wert während der Behandlung der Pulpe in saurem Milieu mit Hilfe von Mineralsäuren oder organischen Säuren erhalten wird, die einzeln oder als Gemisch angewendet werden.

6. Verfahren nach Anspruch 5, dadurch gekennzeichnet, daß die Säure(n) unter Chlorwasserstoffsäure, Phosphorsäure, Schwefelsäure, schwefliger Säure, Essigsäure und Fluorwasserstoffsäure ausgewählt sind.

7. Verfahren nach.einem der Ansprüche 1 bis 6, dadurch gekennzeichnet, daß die Wäsche mit Hilfe von Wasser bei einer Temperatur zwischen 20°C und 60°C durchgeführt wird.

8. Verfahren nach einem der Ansprüche 1 bis 7, dadurch gekennzeichnet, daß das Stabilisierungsmittel für das Wasserstoffperoxid unter Natriumsilikat, löslichen Magnesiumsalzen oder Magnesiumoxid ausgewählt ist.

9. Verfahren nach Anspruch 8, dadurch gekennzeichnet, daß das Natriumsilikat in einer Menge von 0,5 % bis 6 % und vorzugsweise 2 % bis 4 % angewendet wird.

10. Verfahren nach Anspruch 8, dadurch gekennzeichnet, daß das Magnesium in einer Menge von 0,25 % bis 1 % angewendet wird.

11. Verfahren nach einem der Ansprüche 1 bis 10, dadurch gekennzeichnet, daß für die Einwirkung des Wasserstoffperoxids auf die gewaschene Pulpe die Stoffdichte zwischen 5 % und 30 %, die Temperatur 20°C bis 90°C, die eingesetzte Wasserstoffperoxidmenge zwischen 1 % und 10 % und das dem Wasserstoffperoxid zugesetzte alkalische Mittel Natriumhydroxid in einer von 2 % bis 5 % ist.

12. Verfahren nach Anspruch 11, dadurch gekennzeichnet, daß die Stoffdichte 10 % oder mehr, die Temperatur 60°C oder mehr und die eingesetzte Menge Wasserstoffperoxid 5 % oder weniger beträgt.

13. Verfahren nach einem der Ansprüche 1 bis 12, dadurch gekennzeichnet, daß ein Teil oder die gesamte Behandlung der Pulpe in saurem Milieu, der Wäsche und der Einwirkung des Wasserstoffperoxids auf die gewaschene Pulpe in einer Maschine durchgeführt werden kann, die im wesentlichen aus zwei ineinandergreifenden, parallele Achsen umschlingenden und im Inneren eines umgebenden Mantels in gleicher Richtung synchron rotierenden Schraubenflächen besteht, wobei in Vorschubrichtung des Materials zwischen Eintritts- und Austrittsende eine Folge von Antriebs- oder Bremszonen des Stoffes festgelegt wird.

## Claims

1. Process for the production of extracted vegetable pulps, bleached by means of hydrogen peroxide in an aqueous alkaline solution, in which the pulp is treated in an acidic medium before being subjected to the action of hydrogen peroxide, characterised in that, successively and cumulatively:
- the treatment of the pulp in an acidic medium is carried out at a pH whose value remains equal to or less than 2.5,
- the duration of treatment of the pulp in an acidic medium is equal to or greater than 10 minutes,
- the pulp, which is treated in an acidic medium, is washed with an efficiency equal to or greater than 80 %,
- the washed pulp is subjected to the action of hydrogen peroxide in the presence of a stabilising agent for the said peroxide.

2. Process according to Claim 1, characterised in that the consistency during the treatment in an acidic medium is between 2 % and 30 %.

3. Process according to either of Claims 1 and 2, characterised in that the treatment in an acidic medium is carried out at a temperature of between 20°C and 100°C.

4. Process according to Claim 3, characterised in that the temperature is equal to or less than 60°C.

5. Process according to one of Claims 1 to 4, characterised in that the pH during treatment of the pulp in an acidic medium is obtained by means of inorganic or organic acids used alone or in a mixture.

6. Process according to Claim 5, characterised in that the acid or acids are chosen from hydrochloric acid, phosphoric acid, sulphuric acid, sulphurous acid, acetic acid and hydrofluoric acid.

7. Process according to one of Claims 1 to 6, characterised in that the washing is carried out by means of water at a temperature of between 20°C and 60°C.

8. Process according to one of Claims 1 to 7, characterised in that the hydrogen peroxide-stabilising agent is chosen from sodium silicate or magnesium in the for of soluble salts or of magnesia.

9. Process according to Claim 8, characterised in that sodium silicate is used in an amount of 0.5 to 6 %, preferably in an amount of 2 % to 4 %.

10. Process according to Claim 8, characterised in that magnesium is used in an amount of 0.25 % to 1 %.

11. Process according to one of Claims 1 to 10, characterised in that for the action of hydrogen peroxide on the washed pulp, the consistency is between 5 % and 30 %, the temperature between 20°C and 90°C, the amount of hydrogen peroxide used between 1 % and 10 %, and the alkaline agent added to the hydrogen peroxide is sodium hydroxide used in an amount of 2 % to 5 %.

12. Process according to Claim 11, characterised in that the consistency is equal to or greater than 10 %, the temperature equal to or greater than 10 %, and the amount of hydrogen peroxide used equal to or less than 5 %.

13. Process according to one of Claims 1 to 12, characterised in that all or part of the pulp treatment in an acidic medium, the washing, and the action of hydrogen peroxide on the washed pulp may be carried out in a machine essentially consisting of two helicoidal surfaces penetrating into each other, wound around parallel shafts driven in synchronous rotation in the same direction inside a sleeve enclosing them, and defining from upstream to downstream, in the direction of progression of the arterial, a succession of zones for propelling and slowing the material.
